# EUROPEAN PATENT APPLICATION

(11) **EP 4 815 411 A1**
(43) Date of publication of application: **30.09.2026**
(21) Application number: 26151054.9
(22) Date of filing: 09.01.2026
(51) Int. Cl.: H04L 69/16, H04L 43/50, H04L 69/22, H04L 69/321, H04L 69/324, H04L 69/326, H04L 69/325

(54) **NETWORK DEVICE USING SHORTCUT PATH BETWEEN TRANSPORT LAYER OF KERNEL NETWORK PROTOCOL STACK AND NETWORK DEVICE DRIVER AND ASSOCIATED NETWORK PACKET PROCESSING METHOD**

(30) Priority: 28.03.2025 US 202563779375 P; 06.01.2026 US 202619441822
(71) Applicant: Airoha Technology (Suzhou) Limited, Suzhou City Jiangsu 215021 (CN)
(72) Inventor: LU, Xuegang, Suzhou City, 215021 (CN); LIU, Tao, Suzhou City, 215021 (CN); YAN, Fei, Nanjing City, 210037 (CN)
(74) Representative: Hoefer & Partner Patentanwälte mbB

(57) **Abstract**

A network device (100) includes a processor (102) configured to load and execute program codes. The program codes include a kernel network protocol stack (116), a network device driver (118), and an acceleration module (120). The kernel network protocol stack (116) includes a transport layer. The acceleration module (120) is configured to provide a shortcut path (122) between the network device driver (118) and the transport layer.

## Description

### CROSS REFERENCE TO RELATED APPLICATIONS

This application claims the benefit of U.S. Provisional Application No. 63/779,375, filed on March 28th, 2025. The content of the application is incorporated herein by reference.

### BACKGROUND OF THE INVENTION

### 1. FIELD OF THE INVENTION

The present invention relates to communications between network devices, and more particularly, to a network device using a shortcut path between a transport layer of a kernel network protocol stack and a network device driver and an associated network packet processing method.

### 2. DESCRIPTION OF THE PRIOR ART

The service providers may request speed tests on home gateways to assess network speeds. The speed test is a key tool for evaluating the network speed and the network stability, which enables the user to understand download/downlink and upload/uplink speeds and latency, and verify the service quality of the service provider. For example, an optical network unit (ONU) can run a speed test application to visit a speed test server on Internet for measuring the network speed. Since the speed test application belongs to the application layer which is stacked above the transport layer, transmission control protocol (TCP) at the transport layer is therefore responsible for ensuring that the data can be delivered from the source device to the destination device correctly. In a conventional design, a Linux kernel network protocol stack is involved in dealing with TCP packets used for by the uplink/downlink speed test. Hence, the performance of the TCP-based speed test highly depends on the computing power of the processor. It is possible that the TCP-based speed test is unable to measure the actual uplink/downlink speed due to the limited computing power of the processor. Thus, there is a need for an innovative speed test acceleration design which is capable of improving the performance of the TCP-based speed test and saving the resources of the processor.

### SUMMARY OF THE INVENTION

One of the objectives of the claimed invention is to provide a network device using a shortcut path between a transport layer of a kernel network protocol stack and a network device driver and an associated network packet processing method. A network device and a network packet processing method according to the invention are defined in the independent claims. The dependent claims define preferred embodiments thereof.

According to a first aspect of the present invention, an exemplary network device is disclosed. The exemplary network device includes a processor configured to load and execute program codes. The program codes include a kernel network protocol stack, a network device driver, and an acceleration module. The kernel network protocol stack includes a transport layer. The acceleration module is configured to provide a shortcut path between the network device driver and the transport layer.

According to a second aspect of the present invention, an exemplary network packet processing method is disclosed. The exemplary network packet processing method includes: executing a kernel network protocol stack, wherein the kernel network protocol stack comprises a transport layer; executing a network device driver; and enabling a shortcut path between the network device driver and the transport layer.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG. 1 is a diagram illustrating a network device according to an embodiment of the present invention.
FIG. 2 is a diagram illustrating a concept of using an acceleration module to achieve speed test performance improvement according to an embodiment of the present invention.
FIG. 3 is a flowchart illustrating a network processing method for sending packets to another network device according to an embodiment of the present invention.
FIG. 4 is a diagram illustrating interactions between different components of the network device used for sending packets during a speed test procedure according to an embodiment of the present invention.
FIG. 5 is a flowchart illustrating a network processing method for receiving packets from another network device according to an embodiment of the present invention.
FIG. 6 is a diagram illustrating interactions between different components of the network device used for receiving packets during a speed test procedure according to an embodiment of the present invention.

### DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

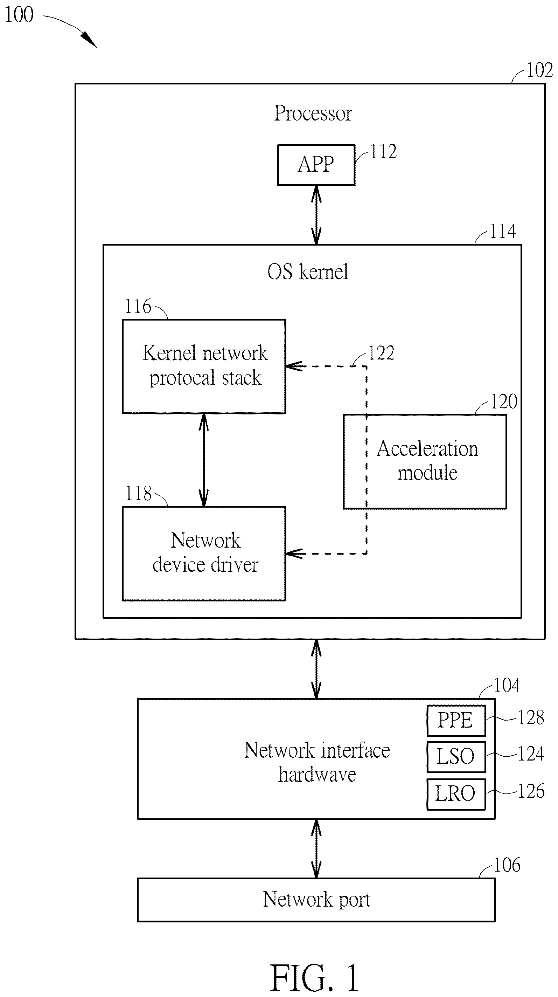

FIG. 1 is a diagram illustrating a network device according to an embodiment of the present invention. By way of example, but not limitation, the network device 100 may be a home gateway with network speed test capability. The network device 100 may include a processor 102, network interface hardware 104, and a network port 106. The processor 102 may be a general-purpose processor such as a central processing unit (CPU), and may load and execute program codes (i.e., software modules) to achieve designated functions. For example, the program codes may include a speed test application (labeled by "APP") 112 (e.g., an ookla^{®} client) and an operation system (OS) kernel (e.g., a Linux kernel) 114. In this embodiment, the OS kernel 114 may include a kernel network protocol stack 116, a network device driver 118, and an acceleration module 120. It should be noted that only the components pertinent to the present invention are illustrated in FIG. 1. In practice, the network device 100 may include additional components to achieve other functions.

The kernel network protocol stack 116 may deal with encapsulation/decapsulation in several network layers. The network port 106 may be a wide area network (WAN) port, allowing the network device 100 to communicate with another network device (e.g., a speed test server) over Internet. The network device driver 118 interacts with the network interface hardware 104 for sending packets to another network device (e.g., speed test server) and receiving packets from another network device (e.g., speed test server). In this embodiment, the network interface hardware 104 is a network adapter including a packet processing engine (PPE) 128. The PPE 128 is a hardware circuit with a hardware-accelerated forwarding function. In addition, the network interface hardware 104 may support large segment offload (LSO) 124 and large receive offload (LRO) 126, where the LSO 124 is used to segment a large transmit (TX) packet into smaller TX packets, and the LRO 126 is used to combine small receive (RX) packets into a larger RX packet.

The acceleration module 120 is configured to provide a shortcut path 122 between the kernel network protocol stack 116 and the network device driver 118 for improving the speed test performance and saving the resources of the processor 102. Preferably, according to the present invention, the shortcut path 122 is enabled during a speed test procedure. Preferably, according to the present invention, the shortcut path 122 may collaborate with LSO 124/LRO 126 to further improve the speed test performance.

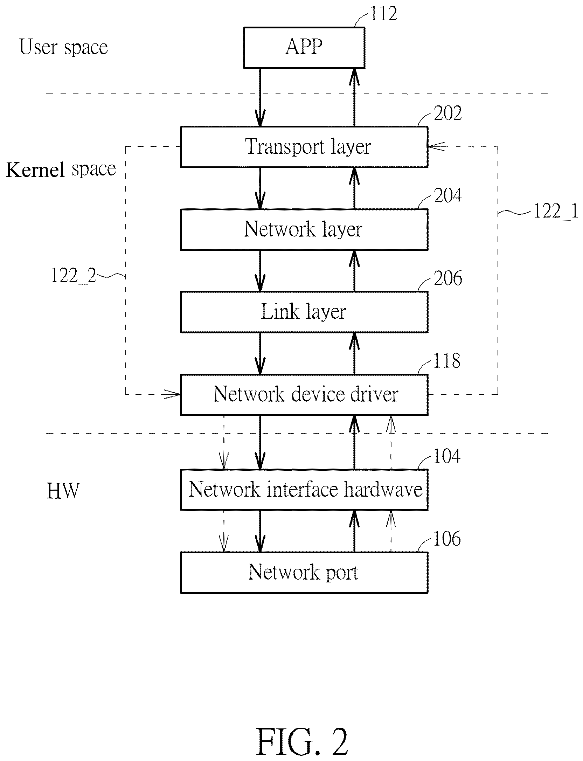

Please refer to FIG. 2 in conjunction with FIG. 1. FIG. 2 is a diagram illustrating a concept of using the acceleration module 120 to achieve speed test performance improvement according to an embodiment of the present invention. The speed test application 112 is executed in a user space. The kernel network protocol stack 116 and the network device driver 118 are executed in a kernel space. By way of example, but not limitation, the kernel network protocol stack 116 may include a transport layer (layer 4) 202, a network layer (layer 3) 204, and a link layer (layer 2) 206. The shortcut path 122 provided by the acceleration module 120 may include one shortcut path 122_1 used for receiving packets (e.g., test packets or acknowledgement (ACK) packets) that are sent from another network device (e.g., speed test server), and another shortcut path 122_2 used for sending packets (e.g., test packets or ACK packets) to another network device (e.g., speed test server). The solid arrow symbols indicate conventional packet processing flows without using the proposed shortcut paths 122_1 and 122_2. The dotted arrow symbols indicate new packet processing flows with the aid of the proposed shortcut paths 122_1 and 122_2.

As shown in FIG. 2, the acceleration module 120 is configured to provide the shortcut path 122_1/122_2 between the network device driver 118 and the transport layer 202 of the kernel network protocol stack 116. In other words, when the proposed shortcut paths 122_1 and 122_2 are enabled, complicated packet processing in the network layer 204 and the link layer 206 may be skipped, and may be replaced by simplified packet processing in the acceleration module 120. Further details of the network processing method employed by the network device (e.g., ookla^{®} client) 100 are described as below with reference to the accompanying drawings.

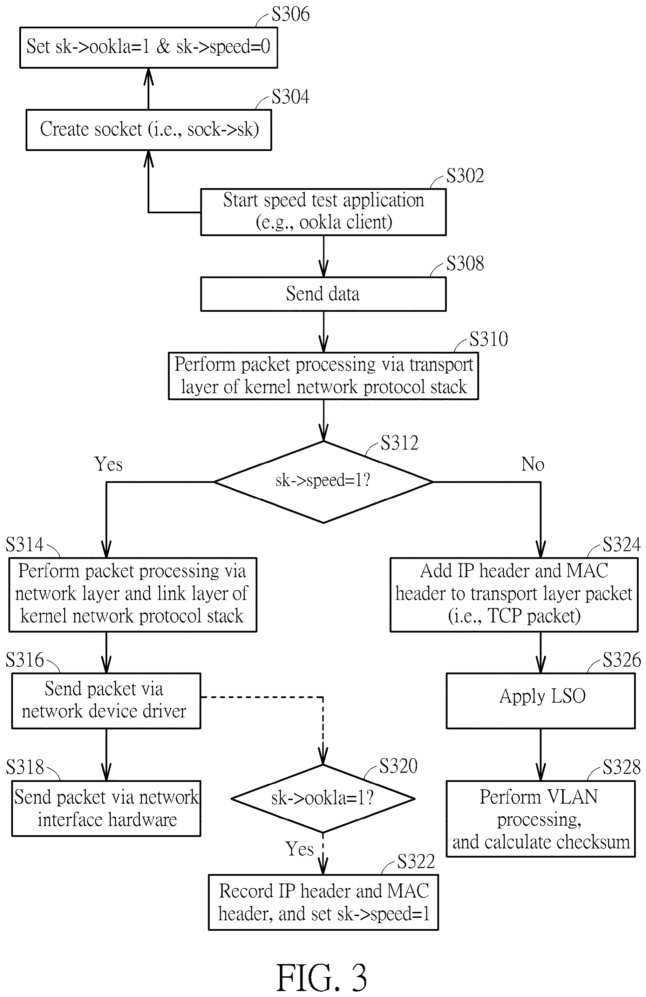

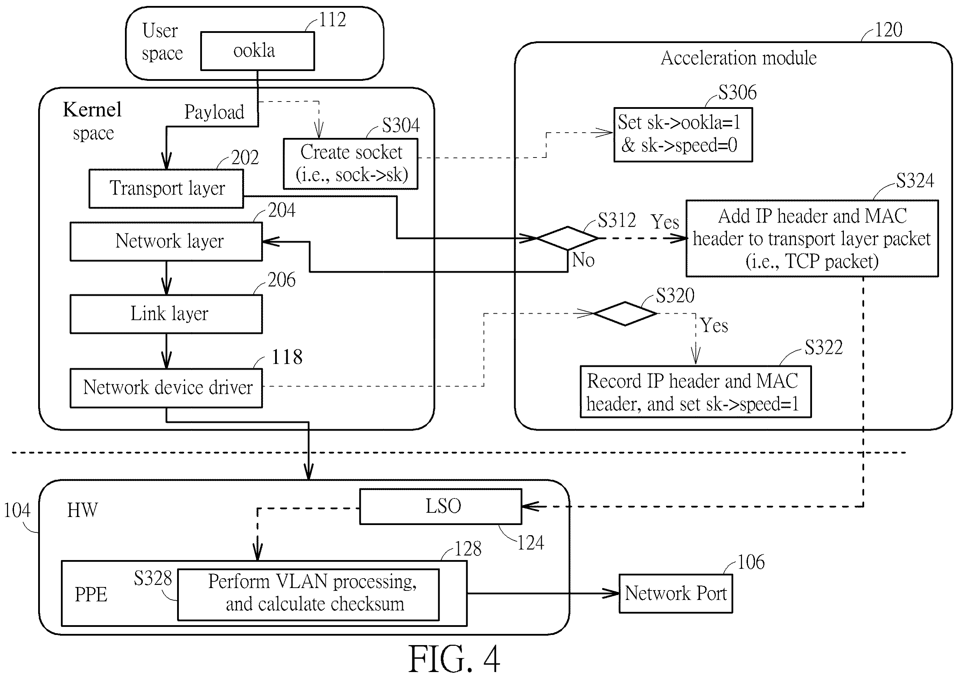

Please refer to FIG. 3 in conjunction with FIG. 4. FIG. 3 is a flowchart illustrating a network processing method for sending packets (e.g., test packets or ACK packets) to another network device (e.g., speed test server) according to an embodiment of the present invention. FIG. 4 is a diagram illustrating interactions between different components of the network device 100 used for sending packets during a speed test procedure according to an embodiment of the present invention. For brevity and simplicity, the following assumes that the speed test application 112 is an ookla^{®} client. In step S302, the processor 102 starts the speed test application 112. In step S304, the OS kernel 114 creates a socket sock->sk for an end-to-end communication between the ookla^{®} client and the ookla^{®} server. In step S306, the acceleration module 120 sets sk->ookla=1 and sk->speed=0 in a data structure of the socket, where sk->ookla=1 indicates that the socket is used for an end-to-end communication for an ookla^{®} speed test procedure, and sk->speed=0 indicates that a learning phase is not complete yet. In step S308, the speed test application 112 sends data for the speed test. In step S310, the data are processed by the transport layer 202 of the kernel network protocol stack 116, and a transport layer packet (e.g., TCP packet) is output from the transport layer 202 for further processing in other network layers.

In step S312, the acceleration module 120 checks if the learning phase is complete. Since sk->speed=0 is currently recorded in the data structure of the socket, implying that the learning phase is not complete yet, the transport layer packet (e.g., TCP packet) output from the transport layer 202 is processed by the network layer 204 and the link layer 206 of the kernel network protocol stack 116 (step S314). In step S316, the network device driver 118 receives a link layer packet (e.g., MAC frame) output from the link layer 206, and instruct the network interface hardware (labeled by "HW") 104 to deal with physical layer (PHY) transmission of the link layer packet (e.g., MAC frame). In step S320, the acceleration module 120 checks if the socket associated with the link layer packet (e.g., MAC frame) to be sent is associated with the socket created for the ookla^{®} speed test. Since sk->ookla=1 is recorded in the data structure of the socket, the acceleration module 120 records a network layer header (e.g., an Internet protocol (IP) header) and a link layer header (e.g., a MAC header) of the link layer packet (e.g., MAC frame) into the data structure of the socket, and updates sk->speed=1 in the data structure of the socket (step S322). In step S318, the network interface hardware 104 performs PHY transmission of the link layer packet (e.g., MAC frame).

After the learning phase is complete, the speed test application 112 keeps sending data for the ookla^{®} speed test (step S308), and another transport layer packet (e.g., TCP packet) is output from the transport layer 202 for further processing in other network layers (step S312). In step S312, the acceleration module 120 checks if the learning phase is complete. Since sk->speed=1 is now recorded in the data structure of the socket, implying that the learning phase is complete, the transport layer packet (e.g., TCP packet) output from the transport layer 202 is processed and transmitted by the acceleration module 120 through the shortcut path 122_2. In step S324, the acceleration module 120 reads the network layer header (e.g., IP header) and the link layer header (e.g., MAC header) that are recorded in the data structure of the socket by the learning phase, and adds the network layer header (e.g., IP header) and the link layer header (e.g., MAC header) to the transport layer packet output from the transport layer 202 to generate a link layer packet, and output the link layer packet to the network device driver 118. Specifically, during the speed test procedure, the acceleration module 120 adds the network layer header (e.g., IP header) and the link layer header (e.g., MAC header) to each of a plurality of transport layer packets output from the transport layer 202 to generate one link layer packet, and output a plurality of link layer packets to the network device driver 118 (step S324).

In step S326, the network interface hardware 104 obtains the link layer packets via the network device driver 118, applies the LSO 124 to the link layer packets according to the TCP maximum segment size (MSS), and sends egress packets output from the LSO 124 to the PPE 128. In step S328, the PPE 128 may perform certain packet processing, including virtual local area network (VLAN) processing, checksum calculation, etc., upon the egress packets, and output the resulting egress packets to another network device (e.g., ookla^{®} server) through the network port (e.g., WAN port) 106.

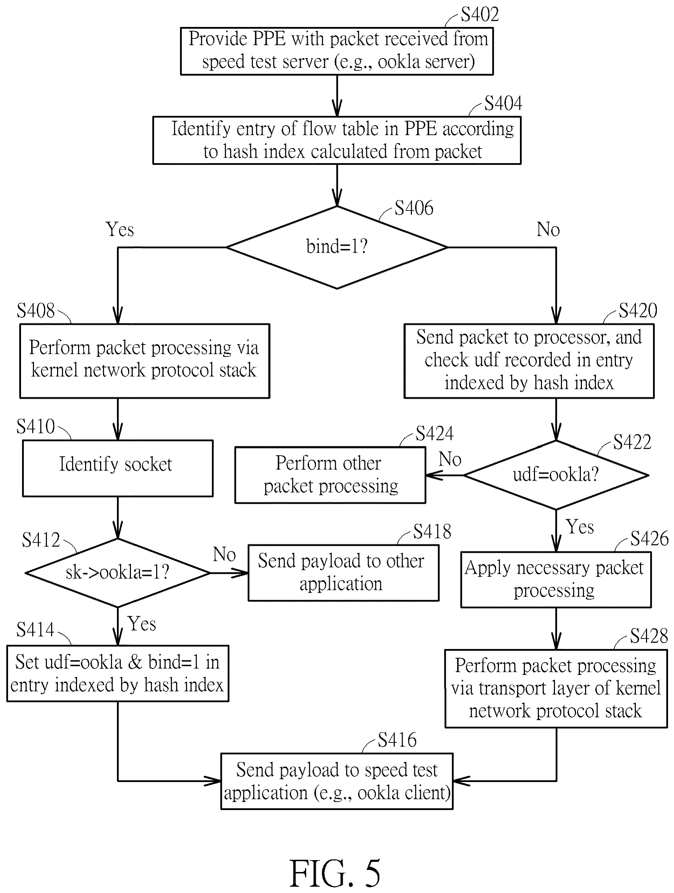

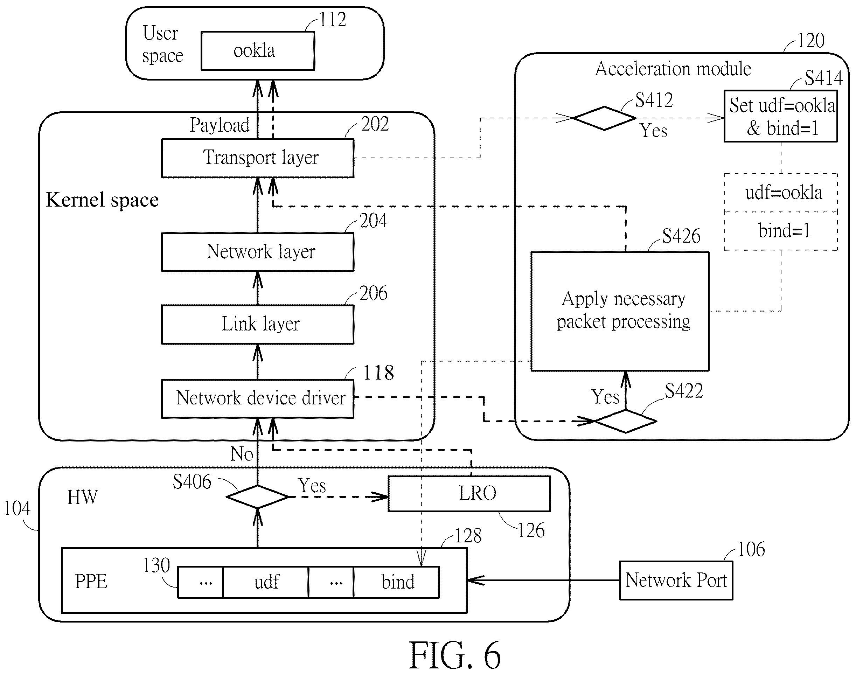

Please refer to FIG. 5 in conjunction with FIG. 6. FIG. 5 is a flowchart illustrating a network processing method for receiving packets (e.g., test packets or ACK packets) from another network device (e.g., speed test server) according to an embodiment of the present invention. FIG. 6 is a diagram illustrating interactions between different components of the network device 100 used for receiving packets during a speed test procedure according to an embodiment of the present invention. For brevity and simplicity, the following assumes that the speed test application 112 is an ookla^{®} client. In step S402, the network interface hardware 104 receives an ingress packet from another network device (e.g., ookla^{®} server) , and provides the ingress packet to the PPE 128. The PPE 128 may include a flow table having a plurality of entries 130 indexed by a plurality of hash indexes, respectively. Specifically, the hash indexes may correspond to different flows, respectively. Each entry 130 may be initialized by default values (e.g., all 0's). Hence, the user defined field (udf) has an initial setting (i.e., udf=0) indicative of disabling the shortcut path 122_1, and the "bind" field has an initial setting (i.e., bind=0) indicating that the learning phase is not complete yet.

In step S404, the PPE 128 calculates a hash index according to the received ingress packet (e.g., particularly, a header of the received ingress packet), and identifies one entry 130 indexed by the calculated hash index. In step S406, the network interface hardware (labeled by "HW") 104 checks if a learning phase is complete. Since bind=0 is currently recorded in the entry 130 indexed by the calculated hash index, implying that the learning phase is not complete yet, the received ingress packet is sent from the network interface hardware 104 to the kernel network protocol stack 116 through the network device driver 118, and then processed by link layer 206, network layer 204, the transport layer 202 of the kernel network protocol stack 116 (step S408). In step S410, the kernel network protocol stack 116 identifies the corresponding socket. In step S412, the acceleration module 120 checks if the corresponding socket is the socket created for ookla^{®} speed test. If the corresponding socket is not the socket created for ookla^{®} speed test (i.e., sk->ookla=0), the kernel network protocol stack 116 sends the payload to other application (step S418) . If the corresponding socket is the socket created for ookla^{®} speed test (i.e., sk->ookla=1), the acceleration module 120 updates the user defined field (e.g., udf=ookla) and the "bind" field (e.g., bind=1) in the entry 130 indexed by the hash index that is calculated and provided by the network interface hardware 104 (step S414), and the kernel network protocol stack 116 sends the payload to the speed test application 112 (e.g., ookla^{®} client) (step S416).

After the learning phase is complete, the speed test server keeps sending packets for the speed test. Hence, the network interface hardware 104 receives another ingress packet from another network device (e.g., ookla^{®} server) and provides the ingress packet to the PPE 128 (step S402), and the PPE 128 calculates a hash index according to the received ingress packet and identifies the same entry 130 indexed by the calculated hash index (step S406) . It should be noted that hash indexes calculated for packets of the same flow (e.g., the flow for ookla^{®} speed test) are the same.

In step S420, the received ingress packet is sent from the network interface hardware 104 to the kernel network protocol stack 116 through the network device driver 118, and the acceleration module 120 checks if the user defined field in the entry 130 indexed by the calculated hash index is set by "ookla". In this embodiment, the network interface hardware 104 receives ingress packets after the learning phase is complete, and applies LRO 126 to the ingress packets from which link layer packets (e.g., MAC frames) are derived.

If the user defined field is not set by "ookla", indicating that the shortcut path 122_1 should be disabled, other packet processing is performed upon the received packet (steps S422 and S424). If the user defined field is set by "ookla", indicating that the shortcut path 122_1 should be enabled, the acceleration module 120 applies necessary packet processing upon the received packet (steps S422 and S426). For example, the necessary packet processing may include skb->pkt_type = PACKET_HOST, skb->ip_summed = CHECKSUM_UNNECESSARY, etc. In step S428, the acceleration module 120 sends the transport layer packet (e.g., TCP packet) to the transport layer 202 of the kernel network protocol stack 116, and the transport layer packet (e.g., TCP packet) is processed by the transport layer 202 of the kernel network protocol stack 116. In step S416, the kernel network protocol stack 116 sends the payload to the speed test application 112 (e.g., ookla^{®} client).

The foregoing outlines the features of several embodiments, enabling those skilled in the art to fully appreciate the aspects of the present disclosure. Those skilled in the art should recognize that the present disclosure provides a foundation for designing or modifying other processes and structures to achieve substantially the same functions and/or substantially the same results as those of the embodiments introduced herein. Furthermore, such equivalent arrangements do not deviate from the scope of the present disclosure, and various changes, substitutions, and alterations may be made without so departing.

## Claims

1. A network device (100) comprising:
a processor (102), configured to load and execute program codes, wherein the program codes comprise:
a kernel network protocol stack (116), comprising:
a transport layer (202);
a network device driver (118); and
an acceleration module (120), configured to provide a shortcut path (122) between the network device driver (118) and the transport layer (202).

2. A network packet processing method comprising:
executing a kernel network protocol stack, wherein the kernel network protocol stack comprises a transport layer;
executing a network device driver; and
enabling a shortcut path between the network device driver and the transport layer.

3. The network device (100) of claim 1, wherein the acceleration module (120) is further configured to read a network layer header and a link layer header recorded in a data structure of a socket, add the network layer header and the link layer header to each of a plurality of transport layer packets output from the transport layer (202) to generate a first link layer packet, and output a plurality of first link layer packets to the network device driver (118); or
the network packet processing method of claim 2, wherein enabling the shortcut path between the network device driver and the transport layer comprises:
reading a network layer header and a link layer header recorded in a data structure of a socket;
adding the network layer header and the link layer header to each of a plurality of transport layer packets output from the transport layer to generate a first link layer packet; and
outputting a plurality of first link layer packets to the network device driver.

4. The network device (100) of claim 3, wherein the kernel network protocol stack (116) is configured to generate and output a second link layer packet to the network device driver (118), and the network device driver (118) is configured to record the network layer header and the link layer header of the second link layer packet into the data structure of the socket; or
the network packet processing method of claim 3, further comprising:
executing the kernel network protocol stack to generate and output a second link layer packet to the network device driver; and
executing the network device driver to record the network layer header and the link layer header of the second link layer packet into the data structure of the socket.

5. The network device (100) of claim 3 or 4, further comprising:
network interface hardware (104), configured to apply large segment offload, in the following also referred to as LSO, to the plurality of first link layer packets; or
the network packet processing method of claim 3 or 4, further comprising:
applying LSO to the plurality of first link layer packets.

6. The network device (100) or the network packet processing method of any one of claims 3 to 5, wherein the plurality of transport layer packets are used for a transmission control protocol, in the following also referred to as TCP, based speed test.

7. The network device (100) of any one of claims 1 and 3 to 6, wherein the acceleration module (120) is further configured to receive a plurality of first link layer packets from the network device driver (118), apply packet processing to each of the plurality of first link layer packets to generate a first transport layer packet, and output a plurality of first transport layer packets to the transport layer (202), where the plurality of first link layer packets correspond to an entry in a flow table, and the entry has a field that records a first setting indicative of enabling the shortcut path (122); or
the network packet processing method of any one of claims 2 to 6, wherein enabling the shortcut path between the network device driver and the transport layer comprises:
receiving a plurality of first link layer packets from the network device driver;
applying packet processing to each of the plurality of first link layer packets to generate a first transport layer packet; and
outputting a plurality of first transport layer packets to the transport layer;
wherein the plurality of first link layer packets correspond to an entry in a flow table, and the entry has a field that records a first setting indicative of enabling the shortcut path.

8. The network device (100) of claim 7, wherein the kernel network protocol stack (116) is configured to receive a second link layer packet from the network device driver (118), and process the second link layer packet to identify a socket, where the second link layer packet correspond to the entry in the flow table, and the entry has the field that records a second setting different from the first setting; and the acceleration module (120) is further configured to update the field by the first setting according to the socket; or
the network packet processing method of claim 7, further comprising:
executing the kernel network protocol stack to receive a second link layer packet from the network device driver and process the second link layer packet to identify a socket, where the second link layer packet correspond to the entry in the flow table, and the entry has the field that records a second setting different from the first setting; and
updating the field by the first setting according to the socket.

9. The network device (100) of claim 7 or 8, further comprising:
network interface hardware (104), configured to apply large receive offload, in the following also referred to as LRO, to ingress packets from which the plurality of first link layer packets are derived; or
the network packet processing method of claim 7 or 8, further comprising:
applying LRO to ingress packets from which the plurality of first link layer packets are derived.

10. The network device (100) or the network packet processing method of any one of claims 7 to 9, wherein the plurality of first transport layer packets are used for a TCP based speed test.

11. The network device (100) of any one of claims 1 and 3 to 10, or the network packet processing method of any one of claims 2 to 10, wherein the shortcut path is enabled during a speed test procedure.
